Europäisches Patentamt

European Patent Office

Office européen des brevets

(19)

(11) Publication number: **0 293 034**
**A2**

(12) # EUROPEAN PATENT APPLICATION

(21) Application number: **88200971.5**

(22) Date of filing: **14.05.88**

(51) Int. Cl.⁴: **A43B 13/20**

(30) Priority: **29.05.87 IT 2071587**

(43) Date of publication of application:
**30.11.88 Bulletin 88/48**

(84) Designated Contracting States:
**DE ES FR GB IT NL SE**

(71) Applicant: **Moumdjian, Armenak**
**Nor Marash Street Bourj-Hammoud**
**Beirut(LB)**

(72) Inventor: **Moumdjian, Armenak**
**Nor Marash Street Bourj-Hammoud**
**Beirut(LB)**

(74) Representative: **Raimondi, Alfredo, Dott. Ing.**
**Prof. et al**
**Studio Tecnico Consulenza Brevetti Piazzale**
**Cadorna 15**
**I-20123 Milano(IT)**

(54) Pneumatic sole for footwear and a corresponding mould and moulding method.

(57) The pneumatic sole for footwear according to the invention comprises an elastomeric or similar element which is either a single element or divided into two parts, the element having side walls, the bottom wall and a top wall bounding a closed chamber, bottom and top walls being interconnected by double-walled substantially channel-section moulded inner sectors whose flanks extend vertically from the top wall of the sole while the between-flanks part of the sectors is unitarily connected to the bottom wall of the sole, the same having at least one non-return valve through which the internal enclosure bounded by the sole walls can be supplied with compressed air; for production of the sole there is provided a mould comprising a bottom element, an intermediate element and a top element, the intermediate element being removed after initial shaping of the top and bottom parts of the sole while the mould top and bottom elements are engaged with one another to produce the connection between the sole parts and the complete cross-linking of the material.

Fig. 1

## Pneumatic sole for footwear and a corresponding mould and mouldig method.

In athletics and other leisure activities footwear having soles of natural rubber or the like are widely used; they facilitate a particularly light and agile step because of the resilience of their soles.

In order to increase resilience and to enable it to be varied to suit individual requirements, a sole of this kind could, conveniently, have a sole in the form of an air chamber whose pressure could be varied to suit requirements. However, the sole must have a well-defined shape to suit anatomical requirements and the shape must remain constant independently of the pressure used so that shaping remains optimum in all cases.

The problem therefore arises of providing a sole having in it hollow chambers which can be pressurized but which remain of substantially constant shape. To this end the sole can be formed with longitudinal channels separated by vertical walls; unfortunately. it is difficult to produce such channels with conventional moulding technologies and so it is also necessary to devise a mould enabling the sole to be made of the required material and to devise the corresponding method of production.

These results are achieved by this invention which provides a pneumatic sole for footwear; the same comprises at least one elastomeric or similar element having side walls, a bottom wall and a top wall bounding a closed chamber, the bottom and top walls being interconnected by double-walled substantially channel-section moulded inner sectors whose flanks extend vertically from the top wall of the sole while the between-flanks part of the sectors is unitarily connected to the bottom wall of the sole, the same having at least one non-return valve through which the internal enclosure bounded by the sole walls can be supplied with compressed air. The sole according to the invention has cross-walls connecting the flanks of the inner sectors.

The sole according to the invention can comprise a single element which extends over the entire extent of the footwear or it can comprise two contiguous separate closed elements, one corresponding to the front part of the sole and the other to the rear part thereof, such elements being adapted to be rigidly secured to the structure of the sole and upper, each such element having a check valve through which the internal enclosures bounded by the walls of the sole elements can be supplied with compressed air at pressures independent of one another.

The mould for producing a pneumatic sole for footwear according to the invention comprises a bottom element, an intermediate element and a top element, the bottom and intermediate elements bounding facing companion cavities which co-operate to produce the negatives of the top and side walls and of the inner sectors of the footwear, and the intermediate and top elements of the mould. bound facing cavities which co-operate to form the mould bottom wall, the intermediate mould element being removable in an intermediate moulding phase and the top and bottom mould elements being interconnected.

For injection moulding, the intermediate element has passages for distributing the moulding material in the plastic state to the various cavities.

At least the intermediate mould element has internal flow passages for a heat control fluid.

For injection moulding the bottom mould element has passages and associated check valves through which compressed air can be supplied to the sole interior during moulding; the injector is disposed above and the top mould element and a passage extends through the top element and communicates with the passages for distributing the moulding material in the plastic state to the various cavities in the intermediate mould element, such passages being present in a number and with a cross-section proportional to the quantity of material to be supplied to the discrete cavities and parts thereof, such passages extending towards the cavities present between the intermediate and top elements of the mould and between the intermediate and bottom elements thereof.

The mould element surfaces defining the cavities have a surface release lining such as a covering of chromium or teflon or the like.

The method of producing a pneumatic sole for footwear according to the invention comprises seriatim the phase of: forming a top sole part comprising a top wall, vertical side walls and vertical inner sectors together with a bottom sole part comprising the bottom wall of the sole in separate cavities of a mould comprising a bottom element, an intermediate element and a top element, the bottom and intermediate elements bounding facing companion cavities which co-operate to produce the negative of the top sole element while the intermediate and top elements bound facing companion cavities which co-operate to form the bottom sole part; removing the intermediate mould element to leave the top sole part shaped in the cavity in the bottom element and the bottom sole part in contact with the mould top part when the material is in a phase of partial cross-linking; then joining. the top and bottom mould parts together to join the top and bottom sole parts to one another with completion of the cross-linking of the material and a sealing-tight connection between the top and bottom sole parts.

During the moulding of the top and bottom sole parts the intermediate mould element is maintained at a controlled temperature such that at least the facing surfacs of the sole parts do not become completely cross-linked before being brought into contact with one another.

While the bottom and top sole parts are being interconnected the internal volume of the sole is pressurized.

Moulding can be performed by compression or by injection.

Further details can be gathered from the following description, reference being made to the accompanying drawings wherein:

Fig. 1 is a perspective view of a sole according to the invention;

Fig. 2 shows the sole in section on the line II-II of Fig. 1;

Fig. 3 is a view in section on the line III-III of Fig. 4 showing in the open position the moulds for production of the sole according to the invention by compression;

Fig. 4 shows the bottom mould element looking in the direction of an arrow IV of Fig. 3;

Fig. 5 shows the intermediate mould element looking in the direction of an arrow V of Fig. 3;

Fig. 6 shows the top mould element looking in the direction of an arrow VI of Fig. 3;

Fig. 7 shows the mould of Fig. 3 in the initial moulding phase;

Fig. 8 shows the mould in the second moulding phase;

Fig. 9 is a perspective view of the top element of an injection mould for the sole according to the invention;

Fig. 10 shows the intermediate mould element for injection moulding;

Fig. 11 shows the bottom mould element;

Fig. 12 is a perspective inverted plan view of the intermediate mould element of Fig. 10;

Fig. 13 shows the intermediate mould element showing the flow passages for a heat control fluid;

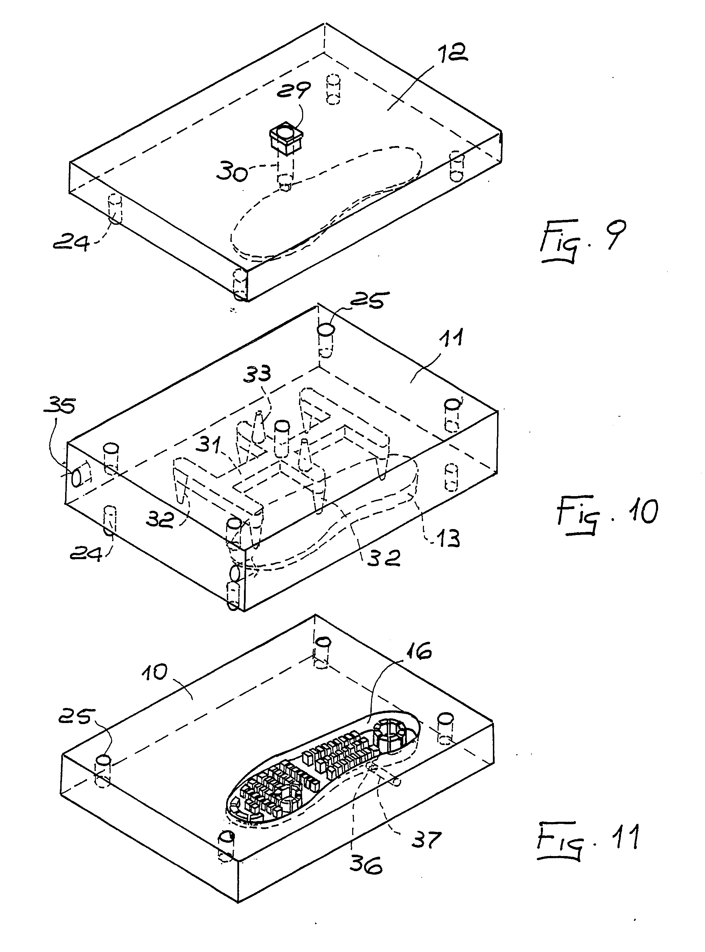

Fig. 14 is a plan view of the intermediate mould element as seen from the part facing the bottom element, and

Fig. 15 shows the two-part sole according to the invention.

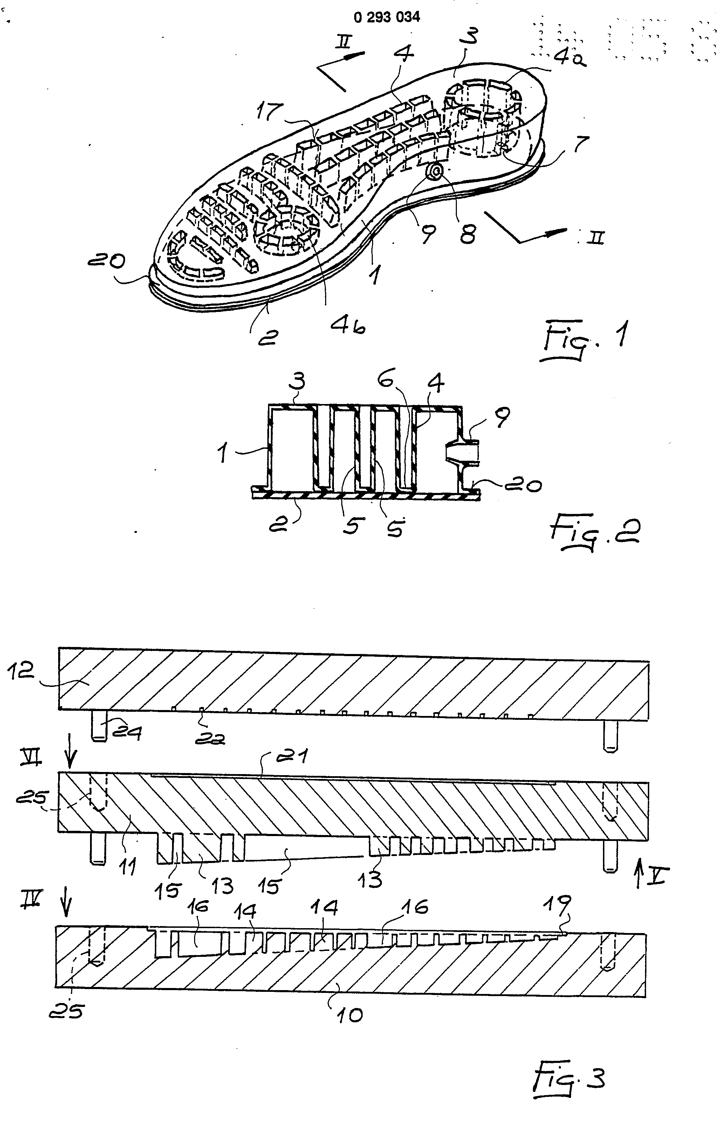

As Fig. 1 shows, the sole according to the invention comprises an element made of an elastomeric material in a mixture providing adequate resilience and workability features and externally shaped to the required sole shape, the element having peripheral walls 1, bottom walls 2 and top walls 3; inside the element there are a number of partitioning sectors 4 shaped in accordance with the required deformability and anatomical characteristics and interconnecting the top and bottom walls.

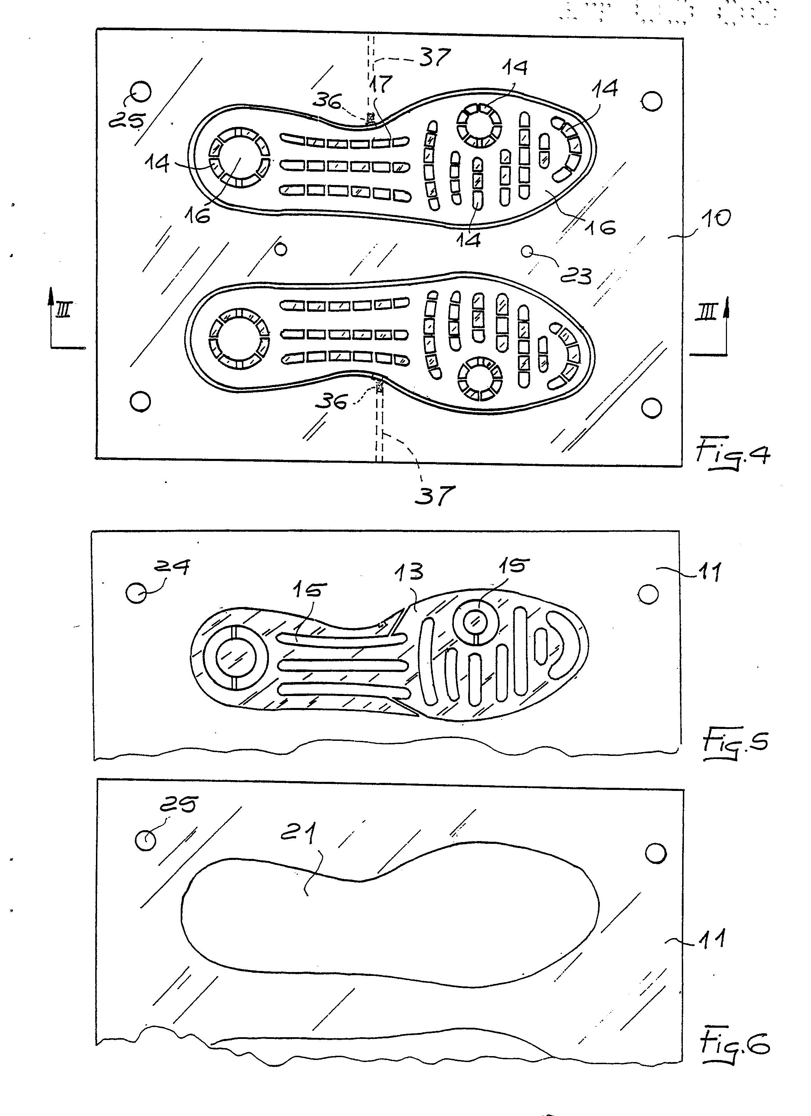

As can be gathered more clearly from Fig. 2, the sectors 4 are devised from a substantially channel-section element whose flanks 5 extend from the top wall 3 and whose apex part 6 is unitarily connected to the bottom wall 2. The sectors 4 stiffen the sole and maintain the connection between the top and bottom walls so that the same remain substantially parallel to one another when the sole interior has been pressurized with compressed air.

If the sectors have anywhere the shape of a closed ring, as indicated by references 4a and 4b in Fig. 1, communicating passages 7 are provided through which the spaces bounded by such sectors can be pressurized.

A valve 8 associated with a seat 9 at the side of the sole enables compressed air to be supplied to the sole interior and for such pressure to be retained in use. The sole according to the invention can be pressurized to an internal pressure which is optimum either for comfort or for athletic efficiency by means of a hand pump which can be connected to the valve 8 and which the wearer can carry to control the pressure in all circumstances, or the sole can be supplied at a predetermined internal pressure.

A mould shown in Figs. 3 - 6 is provided to produce the sole according to the invention; it comprises a bottom element 10, an intermediate element 11 and a top element 12. When interconnected the elements 10, 11 define, by way of the respective associated raised parts 13, 14 and cavities 15, 16, the volume corresponding to a sole part comprising the bottom wall 2, side wall 1 and sectors 4.

Conveniently, the raised parts 14 of the bottom mould element are formed with transverse recesses 17 which are of reduced thickness and which form between the sectors 4 cross-walls 18 operative to interconnect the sector walls at regular spacings 5 and to give dimensional stability to the complete sole.

The cavity of the mould 10 has a seat 19 for forming a flat lateral lip 20 along the peripheral edge of the cavity.

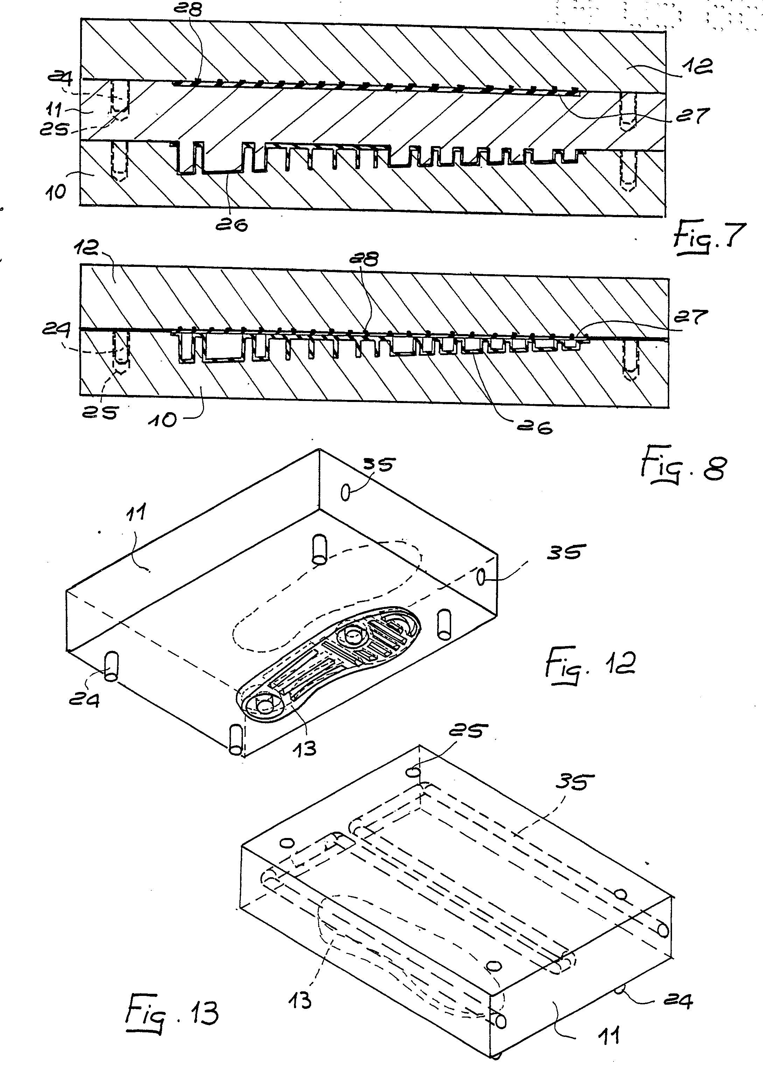

The top surface of the intermediate element 11 is formed with a cavity 21 whose contour is shown in Fig. 6 and corresponds to the outer contour of the lateral lip 20 of the cavity in the bottom mould element 10.

Conveniently, the top element 12 is formed opposite the cavity 21 with a number of shallow narrow apertures 22 disposed along the contour of the cavity or, if required, in a special pattern.

The bottom mould element can also have further cavities 23 for the formation of the valves 8 during the same moulding operation. The mould elements 10 - 12 also have in known manner means 24 and corresponding seats 25 for centring the mould parts when they are interconnected. As Fig. 7 shows, in the initial phase of moulding the bottom sole part 26 and top sole part 27 are shaped simultaneously; when the material being moulded is still in a stage of intermediate cross-linking the mould is opened and the intermediate element removed, leaving the bottom sole part disposed in the corresponding cavity in the element 10.

The top part 27 of the sole remains connected to the top mould element 12 because of the presence of cylindrical raised parts 28 formed from the apertures 22. As Fig. 8 shows, immediately after removal of the intermediate element 11 the mould elements 10, 12 are moved together and clamped together so that the lip 20 and the apex parts 6 of the sectors 4 of the bottom sole part 26 are engaged with the bottom surface of the top sole part 27; these sole parts, since they are still in partly cross-linked conditions, are therefore stuck together until becoming a unitary member at the end of the vulcanization period.

In this phase compressed air is supplied through respective passages to the sole interior so that despite the absence of the intermediate element 11 the shape which has been imparted is maintained and the pressure necessary for completion of the cross-linking of the material is provided.

The resulting sole can then be removed from the mould and the seat 9 can receive the inflation valve 8.

The raised parts 28 can either be cut off if unwanted as can also, if required, a part of the lip 20; the sole part 27 formed at the top in the mould forms the bottom wall 3 while the part 27 forms the side wall 1 and the bottom part 2 and the sectors 4.

Conveniently, the mould according to the invention has flow passages for a heat control fluid and, elements for monitoring temperature and the development of cross-linking and other elements of known kind which will not be further described.

Preferably, the sole is produced by injection moulding in the interests of low-cost production. To this end, and as shown in Figs. 9 - 11, the top mould has a seat 29 adapted to receive an injection nozzle, conveniently in an intermediate position between the two cavities, only one of which is shown for the sake of simplicity; from this position a passage 30 in the top element 12 communicates with a multi-branch passage 31 in the intermediate mould element 11 and for supplies through such passage thre elastomeric material from the injection nozzle to the cavities of the bottom mould element 10 which form the top sole part and to the cavities forming the bottom sole part; conveniently, the passage 31, in dependence with the various volumes to be filled, has three branches 33 for each bottom cavity and one branch 34 for each top cavity.

To ensure the accurate heat control necessary for the injection moulding of elastomers, the intermediate mould element 11 has a coil 35 which is diagrammatically shown in Fig. 13 and through which a heat control fluid flows, the coil 35 having the corresponding flow and heat-conditioning elements.

Conveniently, further coils are provided in the top and bottom mould elements.

For injection moulding, and if necessary, for compression moulding too, check valves 36 are disposed near the pins for forming the valves 9 for the inflation seats; through the valves 36 and associated passages 37 compressed air is supplied to the sole interior during the final phase of moulding as hereinbefore described.

However, injection moulding can proceed by forming the bottom and top sole parts in a first phase by an injection of material in the plastic state whereafter, when sufficient time has elapsed for the material in the cavities to retain its shape but without cross-linking having been completed, the mould is opened, the intermediate element 11 removed and the top element 12 and bottom element 10 clamped together to complete cross-linking and interconnect the two sole parts.

In this phase, as already stated, to ensure that the shape imparted is properly maintained, compressed air is supplied through the passages 37 and valves 36 to keep the material in engagement with the mould cavities.

During the formation of the top and bottom sole elements the top mould element is, conveniently, maintained by the corresponding heat control fluid means at a temperature below the temperature of the bottom mould element so as to ensure that the bottom sole part 26 formed thereby cannot, in view of its reduced thickness, become completely cross-linked faster than the top sole element 27.

To prevent the material in the passages 30 - 33 from completely solidifying and to maintain the facing surfaces of the corresponding top and bottom sole parts in conditions such that they can be joined together, the fluid flowing through the coil 35 maintains the intermediate mould part at a temperature which has been predetermined in dependence upon the material being moulded and at which cross-linking of the material can be completed.

During the phase in which the top and bottom mould elements are joined together the temperature of the mould elements can usefully be increased in order to accelerate the completion of cross-linking.

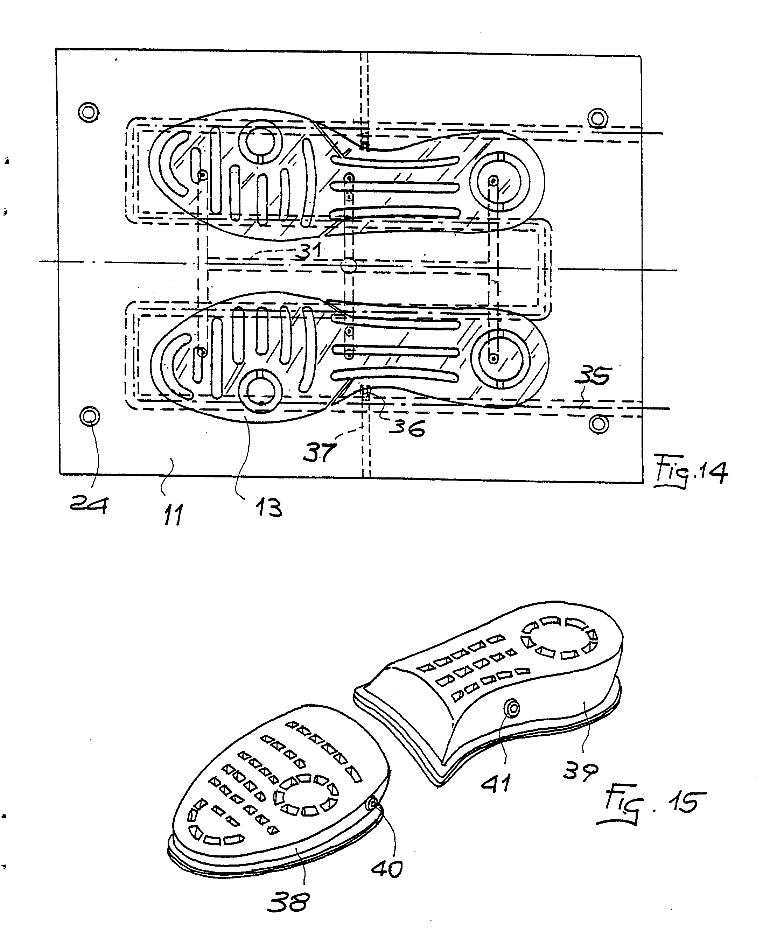

For some uses, such as sports shoes for athletics, the sole is preferably devised in two separate parts 38, 39 in the manner shown in Fig. 15, one part for the front of the foot and the other for the rear of the foot, the parts being rigidly interconnected by the outer sole and upper structure of the shoe. Each of the separate parts 38, 39 has a corresponding check valve 40, 41 respectively through which it can be inflated.

Each of the two parts 38, 39 of the sole can therefore be maintained at different pressures and high pressures can be used which are suitable for the particular athletics concerned without the complete sole being stiffened lengthwise with the elimination or reduction of the necessary flexibility.

Many variants can be introduced without for that reason departing from the scope of the invention as set out in its fundamental characteristics.

## Claims

1. A pneumatic sole for footwear, characterised in that it comprises at least one elastomeric or similar element having side walls, a bottom wall and a top wall bounding a closed chamber, the bottom and top walls being interconnected by double-walled substantially channel-section moulded inner sectors whose flanks extend vertically from the top wall of the sole while the between-flanks part of the sectors is unitarily connected to the bottom wall of the sole, the same having at least one non-return valve through which the internal enclosure bounded by the sole walls can be supplied with compressed air.

2. A sole according to claim 1, characterised in that cross-walls connecting the flanks of the inner sectors are provided.

3. A sole according to claim 1, characterised in that it comprises a single element which extends over the entire extent of the footwear.

4. A sole according to claim 1, characterised in that it comprises two contiguous separate closed elements, one corresponding to the front part of the sole and the other to the rear part thereof, such elements being adapted to be rigidly secured to the structure of the sole and upper, each such element having a check valve through which the internal enclosures bounded by the walls of the sole elements can by supplied with compressed air at pressures independent of one another.

5. A mould for the production of a pneumatic sole for footwear, characterised in that it comprises a bottom element, an intermediate element and a top element, the bottom and intermediate elements bounding facing companion cavities which co-operate to produce the negatives of the top and side walls and of the inner sectors of the footwear, and the intermediate and top elements of the mould bound facing cavities which co-operate to form the mould bottom wall, the intermediate mould element being removable in an intermediate moulding phase and the top and bottom mould elements being interconnected.

6. A mould according to claim 5, characterised in that for injection moulding the intermediate element has passages for distributing the moulding material in the plastic state to the various cavities.

7. A mould according to claim 5, characterised in that at least the intermediate mould element has internal flow passages for a heat control fluid.

8. A mould according to claims 1 to 5, characterised in that for injection moulding the bottom mould element has passages and associated check valves through which compressed air can be supplied to the sole interior during moulding.

9. A mould according to claim 6, characterised in that for injection moulding the injector is disposed above the top mould element and a passage extends through the top element and communicates with the passage for distributing the moulding material in the plastic state to the various cavities in the intermediate mould element, such passages being present in a number and with a cross-section proportional to the quantity of material to be supplied to the discrete cavities and parts thereof, such passages extending towards the cavities present between the intermediate and top elements of the mould and between the intermediate and bottom elements thereof.

10. A mould according to claim 5, characterised in thast the mould element surfaces defining the cavities have a surface release lining such as a covering of chromium or teflon or the like.

11. A method of producing a pneumatic sole for footwear, characterised in that it comprises seriatim the phases of forming a top sole part comprising a top wall, vertical side walls and vertical inner sectors together with a bottom sole part comprising the bottom wall of the sole in separate cavities of a mould comprising a bottom element, an intermediate element and a top element, the bottom and intermediate elements bounding facing companion cavities which co-operate to produce the negative of the top sole element while the intermediate and top elements bound facing companion cavities which co-operate to form the bottom sole part; removing the intermediate mould element to leave the top sole part shaped in the cavity in the bottom element and the bottom sole part in contact with the mould top part when the material is in a phase of partial cross-linking; then joining the top and bottom mould parts together to join the top and bottom sole parts to one another with completion of the cross-linking of the material and a sealing-tight connection between the top and bottom sole parts.

12. A method according to claim 11, characterised in that during the moulding of the top and bottom sole parts the intermediate mould element is maintained at a controlled temperature such that at least the facing surfaces of the sole parts do not become completely cross-linked before being brought into contact with one another.

13. A method according to claim 11, characterised in that while the bottom and top sole parts are being interconnected the internal volume of the sole is pressurized.

14. A method according to one or more of the previous claims, characterised in that the moulding is performed by compression.

15. A method according to one or more of the previous claims, characterised in that the moulding is performed by injection.

0 293 034

*Fig. 1*

*Fig. 2*

*Fig. 3*

Fig.4

Fig.5

Fig.6

Fig. 7

Fig. 8

Fig. 12

Fig. 13

Fig. 9

Fig. 10

Fig. 11

Fig.14

24    11    13    31    36    37    35

Fig. 15

38    40    41    39